# EUROPEAN PATENT APPLICATION

(11) **EP 1 102 462 A1**
(43) Date of publication of application: **23.05.2001**
(21) Application number: 99440321.0
(22) Date of filing: 19.11.1999
(51) Int. Cl.: H04M 3/533, H04L 12/58

(54) **Message system with filtering function and speech announcements**

(71) Applicant: ALCATEL, 75008 Paris (FR)
(72) Inventor: Ferveur, Christian, 67640 Fegersheim (FR); Geyer, Claude, 67640 Fegersheim (FR)
(74) Representative: van Bommel, Jan Peter

(57) **Abstract**

Message systems in the form of email/fax/voice message systems whereby each message is defined by a message signal comprising a code signal (sender or urgency or confidentiality) and a content signal (content or attachments) can have a filtering function. Said code signal is used for said filtering function. To improve the user-friendlyness, said message system is provided with a generator for generating a speech announcement signal for announcing information with respect to specific filtered messages ("there are two messages from Mr. A and three messages from Mr. B"). In addition, a further speech announcement could be generated for announcing information with respect to all messages ("there are ten new messages").

## Description

The invention relates to a message system for processing a message signal comprising at least one code signal and a content signal, which message system comprises
- a memory for storing said message signal comprising said at least one code signal and said content signal,
- a comparator coupled to said memory for comparing said at least one code signal with at least one predefined code signal and for generating a comparison signal depending upon a comparison result.

Such a message system is known in the form of for example an email system having a filtering function. Each email message is defined by a message signal comprising a code signal, for example the sender of this email or the urgency or the confidentiality, and a content signal, for example the content of the email and/or any attachments. Said code signal is used for said filtering function, for example to block emails from unknown senders or to let emails with a high urgency or a high confidentiality through (filtering conditions).

Such a message system is disadvantageous, inter alia, due to being unsufficiently user-friendly.

It is an object of the invention, inter alia, to provide a message system as described in the preamble, which is more user-friendly.

Thereto, the message system according to the invention is characterised in that said message system comprises
- a generator coupled to said comparator for generating a speech announcement signal for announcing information with respect to said message signal in dependence of said comparison signal.

By generating said speech announcement signal for announcing information with respect to message signals which have been filtered (blocked or let through), with said information for example being the number of filtered message signals or the sender of each filtered message signal, the message system according to the invention is more user-friendly.

The invention is based on the insight, inter alia, that a speech announcement function improves the user-friendlyness a lot, especially when combined with said filtering function.

The invention solves the problem, inter alia, of improving the user-friendlyness of a message system.

A first embodiment of the message system according to the invention is characterised in that said generator is coupled to said memory for generating a further speech announcement signal for announcing further information with respect to message signals independently of said comparison signal.

By generating said further speech announcement signal for announcing further information with respect to message signals which have not been filtered, with said further information for example being the number of message signals received during a predefined time-interval, the message system according to the invention becomes even more user-friendly.

A second embodiment of the message system according to the invention is characterised in that said message system comprises
- a controller for receiving a user signal, with said comparator being coupled to said controller for generating said comparison signal in response to said user signal.

By introducing said user signal, a user has got the possibility of controlling said message system, like for example controlling filtering conditions.

A third embodiment of the message system according to the invention is characterised in that said message system has got a kind of a stand alone function, whereby it is located in a pc, for example.

Further embodiments of the message system according to the invention could define for example
- that said user signal comprises at least a part of said code signal (in other words a user defines, for example via speech, one or more filtering conditions to be used), and/or
- that said code signal comprises information defining an origin of said message signal (in other words for example the sender and/or his company and/or his Internet provider and/or his country is used as a filtering condition), and/or
- that said code signal comprises information defining a type of said message signal (in other words several types of messages can be received, like email messages, voice mail messages, faxes, etc. and the type of message is used as a filtering condition).

The invention further relates to a telecommunication system comprising a terminal and a message system for processing a message signal comprising at least one code signal and a content signal, which message system comprises
- a memory for storing said message signal comprising said at least one code signal and said content signal,
- a comparator coupled to said memory for comparing said at least one code signal with at least one predefined code signal and for generating a comparison signal depending upon a comparison result.

The telecommunication system according to the invention is characterised in that said message system comprises
- a generator coupled to said comparator for generating a speech announcement signal in depencence of said comparison signal,
whereby said terminal comprises
- a receiver for receiving said speech announcement signal for announcing information with respect to said message signal.

This message system forms for example part of a switch, like a voice mail system, which according to the invention is capable of filtering, and of generating speech announcement signals with respect to message signals which have been filtered (blocked or let through), and of sending said speech announcement signals to said terminal, which, according to the invention, is capable of announcing information with respect to said filtered message signals. Said sending could for example be done in response to a filtering result of each arrived message signal, and/or after a predefined time-interval has lapsed.

So, according to the telecommunication system according to the invention, the filtering and the announcing are separated from each other, with said filtering being done by said message system and with speech announcements being made by said terminal. Of course, a coupling between said message system and/or switch on one side and said terminal on the other side can be wired, wireless (for example DECT) and mobile (for example GSM), and can be speech-based or data-based (including for example always-on IP-connections).

A first embodiment of the telecommunication system according to the invention is characterised in that said generator is coupled to said memory for generating a further speech announcement signal independently of said comparison signal, whereby said receiver is adapted to receive said further speech announcement signal for announcing further information with respect to message signals.

A second embodiment of the telecommunication system according to the invention is characterised in that said message system comprises
- a controller for receiving a user signal, with said comparator being coupled to said controller for generating said comparison signal in response to said user signal,
whereby said terminal comprises
- a transmitter for transmitting said user signal to said message system.

According to this embodiment the terminal not just takes care of making speech announcements but also takes care of receiving instructions from said user. Said instructions, which are sent to said message system and/or switch in the form of said user signal, could be entered by said user into said terminal in the form of speech, and/or by using a man-machine-interface like a keyboard, and/or by using a smart card and a smart card reader, etc.

The invention also relates to a terminal for use in a telecommunication system comprising said terminal and a message system for processing a message signal comprising at least one code signal and a content signal, which message system comprises
- a memory for storing said message signal comprising said at least one code signal and said content signal,
- a comparator coupled to said memory for comparing said at least one code signal with at least one predefined code signal and for generating a comparison signal depending upon a comparison result.

The terminal according to the invention is characterised in that said message system comprises
- a generator coupled to said comparator for generating a speech announcement signal in depencence of said comparison signal,
whereby said terminal comprises
- a receiver for receiving said speech announcement signal for announcing information with respect to said message signal.

A first embodiment of the terminal according to the invention is characterised in that said generator is coupled to said memory for generating a further speech announcement signal independently of said comparison signal, whereby said receiver is adapted to receive said further speech announcement signal for announcing further information with respect to message signals.

A second embodiment of the terminal according to the invention is characterised in that said message system comprises
- a controller for receiving a user signal, with said comparator being coupled to said controller for generating said comparison signal in response to said user signal,
whereby said terminal comprises
- a transmitter for transmitting said user signal to said message system.

The invention yet also relates to a method for processing a message signal comprising at least one code signal and a content signal, which method comprises the steps of
- in a message system, storing said message signal comprising said at least one code signal and said content signal,
- in said message system, comparing said at least one code signal with at least one predefined code signal and generating a comparison signal depending upon a comparison result.

The method according to the invention is characterised in that said method comprises the steps of
- in said message system, generating a speech announcement signal in depencence of said comparison signal,
- in a terminal, receiving said speech announcement signal for announcing information with respect to said message signal.

The documents EP 907271 and EP 907272 disclose screenphones for user-dependent systems, push-pull systems, unified messaging systems etc. Both documents including all references cited in or with respect to these documents are considered to be incorporated.

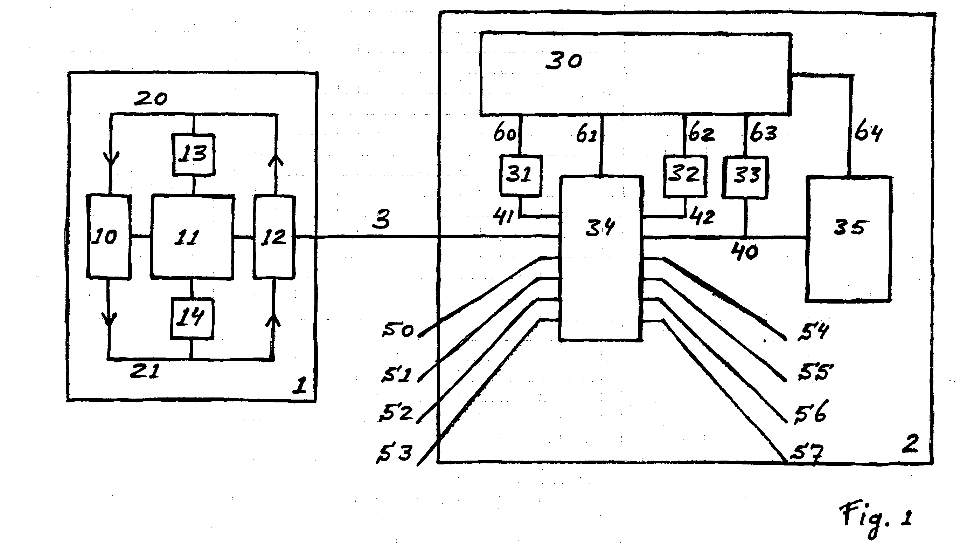

The invention will be further explained at the hand of an embodiment described with respect to a drawing, whereby
figure 1 discloses a telecommunication system according to the invention comprising a terminal according to the invention and a message system according to the invention.

Terminal 1 according to the invention comprises a man-machine-interface 10 (like for example a keyboard + display + microphone + loudspeaker + cardreader) coupled to a processor 11 via a control connection and coupled to a transceiver 12 via a first bus 20 and via a second bus 21. Processor 11 is further coupled via a control connection to transceiver 12 and via a control connection to a unit 13 which is coupled to first bus 20 and via a control connection to a unit 14 which is coupled to second bus 21. Transceiver 12 is coupled via a telecommunication coupling 3 to a network 2 comprising a switch 34 of which a first input/output is coupled to said telecommunication 3 and comprising a message system 30,31,32,33,35.

Message system 30,31,32,33,35 according to the invention comprises a processor 30 coupled to switch 34 via a control connection 61 and coupled to a generator 31 via a control connection 60 and coupled to a controller 32 via a control connection 62 and coupled to a comparator 33 via a control connection 63 and coupled to a memory 35 via a control connection 64. A second input/output of switch 34 is coupled to a bus 40 which is further coupled to comparator 33 and to memory 35. A third input/output of switch 34 is coupled to generator 31 via a connection 41 and a fourth input/output of switch 34 is coupled to a controller 32 via a connection 42. Further input/outputs of switch 34 are coupled to telecommunication couplings 50-57.

The telecommunication system according to the invention as shown in figure 1 functions as follows.

According to a first embodiment, terminal 1 and message system 30,31,32,33,35 are coupled via communication coupling 3 and switch 34. Via telecommunication couplings 50-57, from other subscribers, email messages destined for a user of terminal 1, arrive, which via switch 34 and bus 40 are sent to and stored in memory 35 via bus 40. Thereto, switch 34 informs processor 30 via control connection 61 of the arrival of said email messages, in response to which processor 30 controls switch 34 via control connection 61 in such a way that the corresponding one of couplings 50-57 is coupled to bus 40, etc. Said email messages are in the form of message signals, each message signal comprising at least one code signal (for example defining the sender and/or his company and/or his Internet provider and/or his country and/or the level of urgency and/or the level of confidentiality etc.) and a content signal (for example disclosing the content of said email message and/or attachments etc.). To be able to store such message signals, said memory 35 for example stores each (part of a) code signal and/or each (part of a) content signal at one address or a group of addresses and keeps an overview which addresses contain which message signals, or is for example of the form of a table memory in which at one address each (part of a) code signal and each (part of a) content signal are stored in their own column, etc.

Either directly, or indirectly (for example after a predefined time-interval has lapsed, in which case processor 30 should instruct memory 35 via control connection 64 to put one after the other on bus 40 all message signals received during said predefined time-interval), each message signal present on bus 40 is filtered. Thereto, comparator 33 receives via control connection 63 from processor 30 a predefined (part of a) code signal and compares it with said (part of a) code signal of said message signal, and informs processor 30 via control connection 63 of a comparison result, which then for example is stored via control connection 64 in memory 35 together with the corresponding message signal.

With respect to said first embodiment, according to a first possibility, in response to this comparison result, either directly, or indirectly (for example after a predefined time-interval has lapsed, in which case processor 30 should instruct memory 35 via control connection 64 to put one after the other on bus 40 all message signals received during said predefined time-interval and having either a first or a second comparison result), of the message signals selected due to having either said first or said second comparison result either at least (a part of) their code signals and/or (a part of) their content signals are supplied via bus 40 and switch 34 and connection 41 to generator 31, which converts said (parts of) signals into speech announcement signals which via switch 34 and telecommunication coupling 3 (via which in this case a speech connection has been set up from switch 34 to terminal 1) are sent to terminal 1. In terminal 1, said speech announcement signals flow via transceiver 12 and first bus 20 to man-machine-interface 10, comprising for example a loudspeaker, to announce information with respect to said selected message signals (such that said user of terminal 1 is informed of the arrival of said selected messages).

With respect to said first embodiment, according to a second possibility, in response to this comparison result, either directly, or indirectly (for example after a predefined time-interval has lapsed, in which case processor 30 should instruct memory 35 via control connection 64 to put one after the other on bus 40 all message signals received during said predefined time-interval and having either a first or a second comparison result), of the message signals selected due to having either said first or said second comparison result either at least (a part of) their code signals and/or (a part of) their content signals are supplied via bus 40 and switch 34 and telecommunication coupling 3 (via which in this case a data connection has been set up from switch 34 to terminal 1) to terminal 1, in which said (parts of) signals flow via transceiver 12 and first bus 20 to generator 13, which converts said (parts of) signals into speech announcement signals which via first bus 20 are sent to man-machine-interface 10, comprising for example a loudspeaker, to announce information with respect to said selected message signals (such that said user of terminal 1 is informed of the arrival of said selected messages).

With respect to said first embodiment, according to a third possibility, in response to this comparison result, either directly, or indirectly (for example after a predefined time-interval has lapsed, in which case processor 30 should instruct memory 35 via control connection 64 to put one after the other on bus 40 all message signals received during said predefined time-interval and having either a first or a second comparison result), of the message signals selected due to having either said first or said second comparison result either at least (a part of) their code signals and/or (a part of) their content signals are supplied via bus 40 and switch 34 and connection 41 to generator 31, which converts said (parts of) signals into converted (but for example still data) signals which via switch 34 and telecommunication coupling 3 (via which in this case a data connection has been set up from switch 34 to terminal 1) are sent to terminal 1. In terminal 1, said converted signals flow via transceiver 12 and first bus 20 to generator 13, which further converts said converted signals into speech announcement signals which via first bus 20 are sent to man-machine-interface 10, comprising for example a loudspeaker, to announce information with respect to said selected message signals (such that said user of terminal 1 is informed of the arrival of said selected messages). This converting and further converting could be regarded to be a kind of distributed speech generation (compare for example distributed speech recognition).

Said telecommunication coupling 3 could be a wired connection or a wireless connection (for example DECT) or a mobile radio coupling (for example GSM, CTS, UMTS) or for example a so-called always-on IP-connection having the advantage of not needing to set up said coupling each time when necessary. Said converting by generator 31 and generator 13 respectively could be a a kind of a partial translation, but could also be a kind of a combination of a partial translation and a calculation made for example together with processor 30 and processor 11 respectively, whereby in general a partial translation will be made for making a specific announcement ("one message from the management has arrived" - whereby a (part of a) code signal is translated into the word "management"), and a combination of a partial translation and a calculation will be made for making an announcement for giving an overview ("two urgent messages and three confidential messages have arrived" - whereby (parts of) code signals are translated into the words "urgent" and "confidential" and whereby the numbers two and three are the result of calculations).

According to a second embodiment (usually in addition to said first embodiment), according to a first possibility, either directly, or indirectly (for example after a predefined time-interval has lapsed, in which case processor 30 should instruct memory 35 via control connection 64 to put one after the other on bus 40 all message signals received during said predefined time-interval), of the message signals either at least (a part of) their code signals and/or (a part of) their content signals are supplied via bus 40 and switch 34 and connection 41 to generator 31, which converts said (parts of) signals into speech announcement signals which via switch 34 and telecommunication coupling 3 (via which in this case a speech connection has been set up from switch 34 to terminal 1) are sent to terminal 1. In terminal 1, said speech announcement signals flow via transceiver 12 and first bus 20 to man-machine-interface 10, comprising for example a loudspeaker, to announce information with respect to said message signals (such that said user of terminal 1 is informed of the arrival of said messages).

With respect to said second embodiment, according to a second possibility, said converting is done via generator 13, and according to a third possibility, said converting is done partly via generator 31 and partly via generator 13. Again, said converting by generator 31 and generator 13 respectively could be a a kind of a translation, but could also be a kind of calculation made for example together with processor 30 and processor 11 respectively, whereby in general a translation will be made for making a specific announcement ("one message from Mr. A has arrived, and one message from Mr. B has arrived" - whereby a (part of a) code signal is translated into the words "Mr. A" and "Mr. B"), and a calculation will be made for making an announcement for giving an overview ("ten messages have arrived").

According to a third embodiment (usually in addition to said first and/or second embodiment), said user of terminal 1 decides to control said message system 30,31,32,33,35, and enters data into man-machine-interface 10 (comprising for example a keyboard/card-reader) in response to which under control of processor 11 via transceiver 12 and via telecommunication coupling 3 a data connection is set up with switch 34 and in response to which a user signal in the form of data flows via second bus 21 and transceiver 12 and telecommunication coupling 3 to switch 34. Via control connection 61, processor 30 controls switch 34 in such a way that said user signal in the form of data is supplied via connection 42 to controller 32 for receiving said user signal. Processor 30 is informed of this user signal via control connection 62, and converts said user signal into or extracts from said user signal for example said predefined code signal to be supplied via control connection 63 to comparator 33, thereby allowing said user to control said filtering by using a keyboard/smart-card. Instead of said entering of data into man-machine-interface 10, a user could enter speech into man-machine-interface 10 (comprising for example a microphone), in response to which a user signal in the form of speech flows via second bus 21 to converter 14 for converting a first part of said user signal in the form of speech into data for via processor 11 and transceiver 12 setting up a speech connection via telecommunication coupling 3, after which a second part of said user signal in the form of speech flows via second bus 21 and transceiver 12 and said speech connection via telecommunication coupling 3 to switch 34. Via control connection 61, processor 30 controls switch 34 in such a way that said user signal in the form of speech is supplied via connection 42 to controller 32 for receiving said user signal in the form of speech and for converting said speech into data. Processor 30 is informed of this user signal via control connection 62, and converts said user signal into or extracts from said user signal for example said predefined code signal to be supplied via control connection 63 to comparator 33, thereby allowing said user to control said filtering by using a microphone. Instead of said entering of data or speech into man-machine-interface 10, a user could enter data as well as speech into man-machine-interface 10 (comprising for example a keyboard/card-reader and a microphone), in response to which under control of processor 11 via transceiver 12 and via telecommunication coupling 3 a speech or a data connection is set up with switch 34 and in response to which a user signal in the form of speech flows via second bus 21 and transceiver 12 and telecommunication coupling 3 to switch 34 or said user signal in the form of speech flows via second bus 21 to converter 14 for converting said user signal in the form of speech into data, which converted user signal now in the form of data flows via second bus 21 and transceiver 12 to switch 34, etc.

Again, said telecommunication coupling 3 but now used in the other direction for allowing said user to control said filtering could be a wired connection or a wireless connection (for example DECT) or a mobile radio coupling (for example GSM, CTS, UMTS) or for example a so-called always-on IP-connection having the advantage of not needing to set up said coupling each time when necessary. Further, the first and second embodiment comprising the flow of information from switch to terminal in one direction for informing said user (of filtered messages and possibly of unfiltered messages) and the third embodiment comprising the flow of information from terminal to switch in the other direction for allowing said user to control the filtering could be regarded to be independent from one another, but could also be coupled to one another, whereby the flow of information in one direction could result in information flowing in the other direction (general info to user, user adjusts the filtering, resulting in specific info to user) and vice versa (user adjusts the filtering, and receives specific info in return, possibly in combination with general info).

According to a fourth embodiment (possibly in combination with one or more of the previous embodiments), via telecommunication couplings 50-57, from other subscribers, telephone calls and/or fax messages and/or email messages destined for a user of terminal 1, arrive, due to for example said user being involved in an other call or due to for example said user having programmed switch 34, which calls and/or messages via switch 34 and bus 40 are sent to and stored in memory 35 via bus 40. Thereto, switch 34 informs processor 30 via control connection 61 of the arrival of said calls and/or messages, in response to which processor 30 controls switch 34 via control connection 61 in such a way that the corresponding one of couplings 50-57 is coupled to bus 40, etc. Said calls and/or messages are in the form of message signals, each message signal comprising at least one code signal (for example defining a telephone call and/or the sender of such a call and/or a fax message and/or the sender of this fax message and/or an email message etc.) and a content signal (for example disclosing the content of said call and/or message and/or attachments etc.). To be able to store such message signals, said memory 35 for example stores each (part of a) code signal and/or each (part of a) content signal at one address or a group of addresses and keeps an overview which addresses contain which message signals, or is for example of the form of a table memory in which at one address each (part of a) code signal and each (part of a) content signal are stored in their own column, etc.

Again, either directly, or indirectly, each message signal present on bus 40 is filtered, and again, in accordance with for example one of the three possibilities of the first embodiment, said user of terminal 1 is informed of the arrival of said selected calls and/or messages, for example of all arrived calls, or of all arrived fax messages, or of all arrived email messages, or just of calls originating from the management and/or just of fax messages originating from other countries and/or of email messages having a confidential character etc.

Instead of terminal 1 and message system 30,31,32,33,35 shown in figure 1 as two separate units, according to a first alternative, both could be combined, for example by integrating processor 30 into processor 11, and by locating generator 31, controller 32, comparator 33 and memory 35 into terminal 1 with one side coupled to processor 11 via a control connection and with an other side coupled to first bus 20 and/or to second bus 21. In that case, network 2 has a switching function only, and preferably telecommunication coupling 3 will be a so-called always-on IP-connection, or at least an xDSL or ISDN coupling. According to a second alternative, in network 2 switch 34 is partly replaced by bus 40, in other words by directly coupling bus 40 to connections 41 and 42, thereby introducing a main bussystem which is to be coupled to switch 34, with couplings 3 and 50-57 still being connected to switch 34. As a result, in network 2, the message system and the switch are completely separated.

When speaking of parts of code signals and parts of content signals, of course each part of a code signal could be regarded to be a further (second, third etc.) code signal, and each part of a content signals could be regarded to be a further (second, third etc.) content signal, whereby for example through standardisation it could be defined how telephone calls, fax messages and email messages etc. are to be converted into digital message signals (in other words which parts form content signals, which parts form code signals, how are content signals and code signals to be defined, in which order etc.).

All embodiments are just embodiments and do not exclude other embodiments not shown and/or described. All possibilities are just possibilities and do not exclude other possibilities not shown and/or described. All alternatives are just alternatives and do not exclude other alternatives not shown and/or decribed. For example, each embodiment and/or possibility and/or alternative could be combined with one or more of the other embodiments and/or possibilities and/or alternatives.

## Claims

1. Message system for processing a message signal comprising at least one code signal and a content signal, which message system comprises
- a memory for storing said message signal comprising said at least one code signal and said content signal,
- a comparator coupled to said memory for comparing said at least one code signal with at least one predefined code signal and for generating a comparison signal depending upon a comparison result,
characterised in that said message system comprises
- a generator coupled to said comparator for generating a speech announcement signal for announcing information with respect to said message signal in dependence of said comparison signal.

2. Message system according to claim 1, characterised in that said generator is coupled to said memory for generating a further speech announcement signal for announcing further information with respect to message signals independently of said comparison signal.

3. Message system according to claim 1 or 2, characterised in that said message system comprises
- a controller for receiving a user signal, with said comparator being coupled to said controller for generating said comparison signal in response to said user signal.

4. Telecommunication system comprising a terminal and a message system for processing a message signal comprising at least one code signal and a content signal, which message system comprises
- a memory for storing said message signal comprising said at least one code signal and said content signal,
- a comparator coupled to said memory for comparing said at least one code signal with at least one predefined code signal and for generating a comparison signal depending upon a comparison result,
characterised in that said message system comprises
- a generator coupled to said comparator for generating a speech announcement signal in depencence of said comparison signal,
whereby said terminal comprises
- a receiver for receiving said speech announcement signal for announcing information with respect to said message signal.

5. Telecommunication system according to claim 4, characterised in that said generator is coupled to said memory for generating a further speech announcement signal independently of said comparison signal, whereby said receiver is adapted to receive said further speech announcement signal for announcing further information with respect to message signals.

6. Telecommunication system according to claim 4 or 5, characterised in that said message system comprises
- a controller for receiving a user signal, with said comparator being coupled to said controller for generating said comparison signal in response to said user signal,
whereby said terminal comprises
- a transmitter for transmitting said user signal to said message system.

7. Terminal for use in a telecommunication system comprising said terminal and a message system for processing a message signal comprising at least one code signal and a content signal, which message system comprises
- a memory for storing said message signal comprising said at least one code signal and said content signal,
- a comparator coupled to said memory for comparing said at least one code signal with at least one predefined code signal and for generating a comparison signal depending upon a comparison result,
characterised in that said message system comprises
- a generator coupled to said comparator for generating a speech announcement signal in depencence of said comparison signal,
whereby said terminal comprises
- a receiver for receiving said speech announcement signal for announcing information with respect to said message signal.

8. Terminal according to claim 7, characterised in that said generator is coupled to said memory for generating a further speech announcement signal independently of said comparison signal, whereby said receiver is adapted to receive said further speech announcement signal for announcing further information with respect to message signals.

9. Terminal according to claim 7 or 8, characterised in that said message system comprises
- a controller for receiving a user signal, with said comparator being coupled to said controller for generating said comparison signal in response to said user signal,
whereby said terminal comprises
- a transmitter for transmitting said user signal to said message system.

10. Method for processing a message signal comprising at least one code signal and a content signal, which method comprises the steps of
- in a message system, storing said message signal comprising said at least one code signal and said content signal,
- in said message system, comparing said at least one code signal with at least one predefined code signal and generating a comparison signal depending upon a comparison result,
characterised in that said method comprises the steps of
- in said message system, generating a speech announcement signal in depencence of said comparison signal,
- in a terminal, receiving said speech announcement signal for announcing information with respect to said message signal.
